# EUROPEAN PATENT SPECIFICATION

(11) **EP 4 219 369 B1**
(45) Date of publication and mention of the grant of the patent: **16.10.2024**
(21) Application number: 22209485.6
(22) Date of filing: 24.11.2022
(51) Int. Cl.: B66B 1/34

(54) **DISTRIBUTED PROCESSING SYSTEM AND METHOD FOR PROCESSING ELEVATOR CALLS**
VERTEILTES VERARBEITUNGSSYSTEM UND VERFAHREN ZUR VERARBEITUNG VON AUFZUGSANRUFEN
SYSTÈME ET PROCÉDÉ DE TRAITEMENT DISTRIBUÉ POUR TRAITER DES APPELS D'ASCENSEUR

(30) Priority: 29.01.2022 CN 202210111404
(43) Date of publication of application: 02.08.2023
(73) Proprietor: OTIS Elevator Company, Farmington, CT 06032 (US)
(72) Inventor: ZHANG, Yu, Shanghai, 200335 (CN); CHEN, Qiang, Shanghai, 200335 (CN); WANG, Shenhong, Shanghai, 200335 (CN)
(74) Representative: Dehns

(56) References cited:
- EP-A1- 0 663 366
- US-A1- 2019 349 724
- US-A1- 2020 102 184
- US-A1- 2020 102 186
- US-A1- 2021 107 766

## Description

### Technical field

The present application relates to elevator technology and Internet of things technology, in particular to a distributed processing system for processing an elevator call, a method for processing an elevator call using the distributed processing system, and a computer readable storage medium on which a computer program for realizing an elevator call generation method is stored.

### Background

With the development of wireless communication technology, a wireless calling method is being widely used. Generally, an elevator system of a building includes a plurality of call units, and an elevator management device will allocate corresponding call units to the elevator calls in response to elevator calls sent by terminal devices such as mobile robots and smart phones. For call management, how to ensure that elevator calls are received and processed reliably is an important topic. US 2020/0102184 A1 discloses a method for operating a multi-car elevator system. Data about the cars is provided at time intervals, and when the provision of data relating to a first car fails, a shaft position of said car is determined. A quarantine section is then determined, blocking other cars in the system. US 2019/349724 A1 discloses an elevator service request system whereby a social media application running on an external device communicates wirelessly with wireless beacons to operate an elevator.

### Summary

According to an aspect of the present application, there is provided a distributed processing system for processing an elevator call, comprising a plurality of wireless communication modules deployed in an elevator service area, each of the wireless communication modules is associated with one or more call units and configured to:
perform a call assignment operation in response to an elevator call from a terminal device specifying it as a target wireless communication module; and
return a message about call assignment to the terminal device.

Optionally, in the above distributed processing system, the target wireless communication module is indicated by a device identification of one of the wireless communication modules included in the elevator call, and at least one of the wireless communication modules is further configured to broadcast a list about the wireless communication modules, the list includes device identifications of the wireless communication modules for selection by the terminal device.

Optionally, in the above distributed processing system, the target wireless communication module is indicated by a device identification of one of the wireless communication modules included in the elevator call, and a list about the wireless communication modules is built into the terminal device, the list includes device identifications of the wireless communication modules for selection by the terminal device.

Optionally, in the above distributed processing system, the target wireless communication module is indicated by a device identification of one of the wireless communication modules included in the elevator call, and the terminal device acquires a list about the wireless communication modules from a call controller or cloud, the list includes device identifications of the wireless communication modules for selection by the terminal device.

Optionally, in the above distributed processing system, the message about call assignment includes an identification of the assigned call unit or an indication of call assignment failure.

Optionally, in the above distributed processing system, each of the wireless communication modules is configured to perform the call assignment operation in the following manner:
assigning one of the associated call units to the elevator call based on the elevator call and an operation state of the associated call units acquired from a call controller,
wherein the operation state includes floors where cars of the call units are currently located and current moving direction.

Optionally, in the above distributed processing system, each of the wireless communication modules is further configured to:
send the message about call assignment to the call controller associated with the assigned call unit.

Optionally, in the above distributed processing system, the wireless communication module communicates with the call controller in a wired or wireless manner.

In addition to one or more of the above features, in the above distributed processing system, the list also includes state information of the wireless communication modules and service feature that can be provided by the call units associated with the wireless communication modules.

In addition to one or more of the above features, in the above distributed processing system, the plurality of wireless communication modules are powered by at least two independently operating power supplies.

In addition to one or more of the above features, in the above distributed processing system, the list indicates an order of the wireless communication modules in which the terminal device sends the elevator call by means of positions of the wireless communication modules present in the list.

In addition to one or more of the above features, in the above distributed processing system, the wireless communication module is installed within a landing or elevator hoistway.

According to another aspect of the present application, there is provided an elevator control system comprising a distributed processing system having one or more of the above features.

According to another aspect of the present application, there is provided a method for processing an elevator call using a distributed processing system, wherein the distributed processing system comprises a plurality of wireless communication modules deployed in an elevator service area, each of the wireless communication modules is associated with one or more call units, and the method comprises the following steps:
performing a call assignment operation by one of the plurality of wireless communication modules in response to an elevator call sent by an terminal device specifying it as a target wireless communication module; and
returning a message about call assignment to the terminal device by the wireless communication module performing the call assignment operation.

Optionally, the above method further comprises the steps of:
broadcasting a list about the wireless communication modules by at least one of the plurality of wireless communication modules, the list includes device identifications of the wireless communication modules.

Optionally, in the above method, the message about call assignment includes an identification of the assigned call unit or an indication of call assignment failure.

Optionally, in the above method, the step of performing the call assignment operation comprises:
assigning one of the associated call units to the elevator call based on the elevator call and an operation state of the associated call units acquired from a call controller, wherein the operation state includes floors where cars of the call units are currently located and current moving direction.

Optionally, the above method further comprises the steps of:
sending the message about call assignment to the call controller associated with the assigned call unit by the wireless communication module performing the call assignment operation.

Optionally, in the above method, the wireless communication module communicates with the call controller in a wired or wireless manner.

Optionally, in the above method, the list also includes state information of the wireless communication modules and service feature that can be provided by the call units associated with the wireless communication modules.

Optionally, in the above method, the plurality of wireless communication modules are powered by at least two independently operating power supplies.

Optionally, in the above method, the list indicates an order of the wireless communication modules in which the terminal device sends the elevator call by positions of the wireless communication modules present in the list Optionally, in the above method, the wireless communication module is installed within a landing or elevator hoistway.

According to another aspect of the present application, there is provided a computer-readable storage medium on which a computer program suitable for execution on a processor of a terminal device is stored, and the execution of the computer program causes the following operations:
A. selecting a target wireless communication module to send an elevator call from a list about wireless communication modules, the list includes device identifications of a plurality of wireless communication modules, wherein each of the wireless communication modules is associated with one or more call units;
B. sending an elevator call, the elevator call includes a device identification of the terminal device and a device identification of the target wireless communication module; and
C. receiving a message about call assignment from the target wireless communication module.

Optionally, in the above computer-readable storage medium, the execution of the computer program also causes the following operation:
D. receiving the list about the wireless communication modules from one of the plurality of wireless communication modules.

Optionally, in the above computer-readable storage medium, the execution of the computer program also causes the following operation:
E. acquiring the list about the wireless communication modules from a call controller or cloud.

Optionally, in the above computer-readable storage medium, the execution of the computer program also causes the following operation:
F. accessing firmware or memory of the terminal device to acquire the list about the wireless communication modules.

Optionally, in the above computer-readable storage medium, the message about call assignment includes an identification of the assigned call unit or an indication of call assignment failure.

Optionally, in the above computer-readable storage medium, the execution of the computer program also causes that step A or step B is allowed to be executed when one of the following conditions is met: 1) the message about call assignment is not received within a set time interval after sending the elevator call; 2) the message about call assignment comprises an indication of call assignment failure.

Optionally, in the above computer-readable storage medium, the list also includes state information of the wireless communication modules and service feature that can be provided by the call units associated with the wireless communication modules.

Optionally, in the above computer-readable storage medium, the list indicates an order of the wireless communication modules in which the terminal device sends the elevator call by positions of the wireless communication modules in the list.

Optionally, the computer-readable storage medium is provided on a remote server suitable for access by the terminal device.

### Description of the drawings

The above and/or other aspects and advantages of the present application will be more clearly and easily understood from the following description of various aspects in conjunction with the accompanying drawings, in which the same or similar elements are designated by the same reference numerals. The accompanying drawings include:
Figs. 1A and 1B are exemplary lists of wireless communication modules in a distributed processing system.
Fig. 2 is a schematic block diagram of a distributed processing system for processing elevator calls according to some embodiments of the present application.
Fig. 3 is a schematic block diagram of an elevator control system according to other embodiments of the present application.
Fig. 4 is a flowchart of a method for processing an elevator call using a distributed processing system according to other embodiments of the present application.
Fig. 5 is a schematic block diagram of a typical terminal device.
Fig. 6 is a flowchart of a method for generating an elevator call according to other embodiments of the present application.

### Detailed description

The present application is described more fully below with reference to the accompanying drawings, in which illustrative embodiments of the application are illustrated. However, the present application may be implemented in different forms and should not be construed as limited to the embodiments presented herein. The presented embodiments are intended to make the disclosure herein comprehensive and complete, so as to more comprehensively convey the protection scope of the application to those skilled in the art.

In this specification, terms such as "comprising" and "including" mean that in addition to units and steps that are directly and clearly stated in the specification and claims, the technical solution of the application does not exclude the presence of other units and steps that are not directly and clearly stated in the specification and claims.

Unless otherwise specified, terms such as "first" and "second" do not indicate the order of the units in terms of time, space, size, etc., but are merely used to distinguish the units.

In this specification, the term "elevator service area" refers to various areas related to elevator ride services, including but not limited to landing (the area of each floor where the elevator stops so as to provide an access of passengers or cargos) and elevator hoistway.

In this specification, the term "call unit" refers to a transport device that electrically drives a lift car to transport passengers or cargos.

In some embodiments of the present application, a plurality of wireless communication modules are deployed in the elevator service area to form an Internet of things system, wherein these wireless communication modules, as access nodes of the Internet of things system, not only have the ability of wireless communication with terminal devices (for example, such as mobile terminals, e.g., mobile phones, tablets, laptops, and mobile robots, etc.), but are also configured to have the processing capability of assigning corresponding call units for elevator calls. In the above system, call assignment can be completed independently by each of multiple nodes, so the above Internet of things system can be regarded as a distributed processing system. This distributed processing mode has strong robustness compared with the centralized processing mode in which the specified central node processes the elevator calls. In addition, since the wireless access function and call distribution function can be realized at a single node, the overhead of data transmission between nodes can be saved.

It should be noted that the above wireless communication modules can be installed at various locations in the elevator service area, such as but not limited to landing and elevator hoistway.

Optionally, the wireless communication modules are powered by at least two independently operating power supplies, thereby further improving the robustness of the system.

In other embodiments of the present application, each of the wireless communication modules has an association with one or more call units. That is, the call unit assigned by each of the wireless communication modules for the received elevator call is selected from the call units with which it has an associated relationship. The above association can be flexibly set according to the actual application needs. For example, a call unit near a wireless communication module can be associated with the wireless communication module, or a call unit with the same or different use service features can be associated with a wireless communication module. The service features here may include the type of use (for example, passenger only, dual-use of passenger and cargo, and cargo only), the landing floor of the call unit, the operation period, and the like.

In other embodiments of the present application, after a call assignment operation is performed, each of the wireless communication modules will return a message about call assignment to the terminal device that sent the elevator call. Exemplarily, the message about call assignment may include an identification of the assigned call unit or an indication of call assignment failure. On the other hand, after successfully assigning the call, each of the wireless communication modules also sends the message about call assignment to a call controller associated with the assigned call unit (i.e., a call controller responsible for controlling the operation of the assigned call unit). Optionally, the wireless communication module communicates with the call controller in a wired or wireless manner.

In other embodiments of the present application, some or all of the wireless communication modules are also configured to broadcast a list about the wireless communication modules to devices nearby, the list includes at least device identifications of respective wireless communication modules.

In other embodiments of the present application, the above list about the wireless communication modules can be built into the terminal device (for example, reside in firmware of the terminal device in the form of hardware coding, or stored in memory of the terminal device as configuration data of an application running on the terminal device). Therefore, the terminal device can acquire the list about the wireless communication modules by accessing the firmware or memory.

In other embodiments of the present application, the above list about the wireless communication modules can be acquired by the terminal device from devices other than the wireless communication modules, such devices include, but are not limited to, a call controller and cloud.

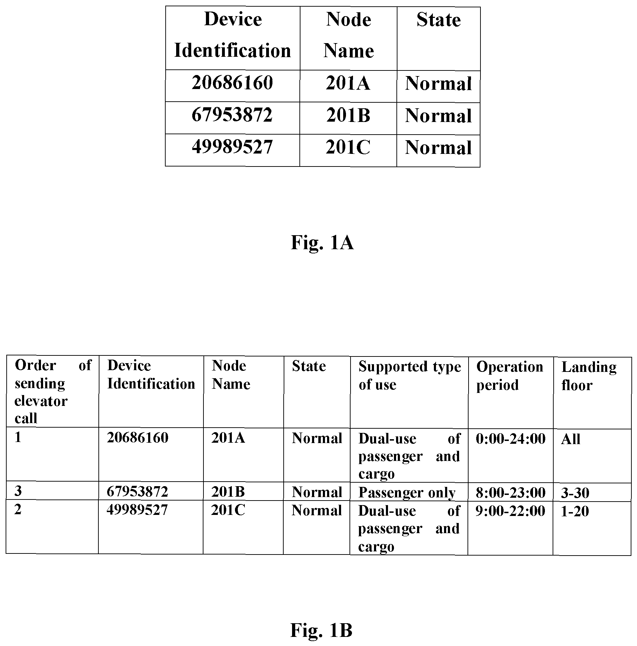

Optionally, the above list may also include state information of the wireless communication module (for example, as shown in Fig. 1A). The states here include, but are not limited to, a normal operating state, an abnormal operating state, an active state, a sleep state, and the like. The terminal device can select the wireless communication module (hereinafter also referred to as the target wireless communication module) to send the elevator call from the list. It should be noted that whether the wireless communication module is configured to have a broadcast function can be determined according to the position of the wireless communication module and the signal transmission power.

Optionally, in addition to the device identification and state information of the wireless communication module, the above list about the wireless communication modules may further include other information items, including but not limited to the service feature of the controlled call unit or the order of the wireless communication module sending the elevator call, for example, as shown in Fig. 1B. Optionally, an order of the wireless communication modules in which the terminal device sends the elevator call may be indicated by positions of the wireless communication modules in the list. For example, in the example shown in Fig. 1A, the terminal device may first send an elevator call to the wireless communication module 201A in the first row of the list. If a message about call assignment from the wireless communication module A is not received within a preset time period or a message indicating assignment failure is received from the wireless communication module A, the terminal device may send an elevator call to the wireless communication module 201B in the second row of the list, and so on.

In order to avoid repeated assignment of call units (for example, different call units are assigned to the same elevator call or the same call unit is assigned to different elevator calls at the same time), a coordination mechanism can be introduced between wireless communication modules. However, in some embodiments of the present application, in consideration of simplifying control logic and saving communication overhead, the above repeated assignment can be avoided by setting certain restrictions at the terminal device. Specifically, the terminal device can be made to send an elevator call to only one wireless communication module in the list at a time (for example, when the elevator call contains the device identification of the wireless communication module as the receiver), and it is allowed to send an elevator call to other wireless communication modules in the list only when one of the following conditions is met:
Case 1: the message about call assignment is not received within a set time interval after sending the elevator call;
Case 2: the message about call assignment comprises an indication of call assignment failure.

Specific embodiments of the present application are further described below with the help of the accompanying drawings.

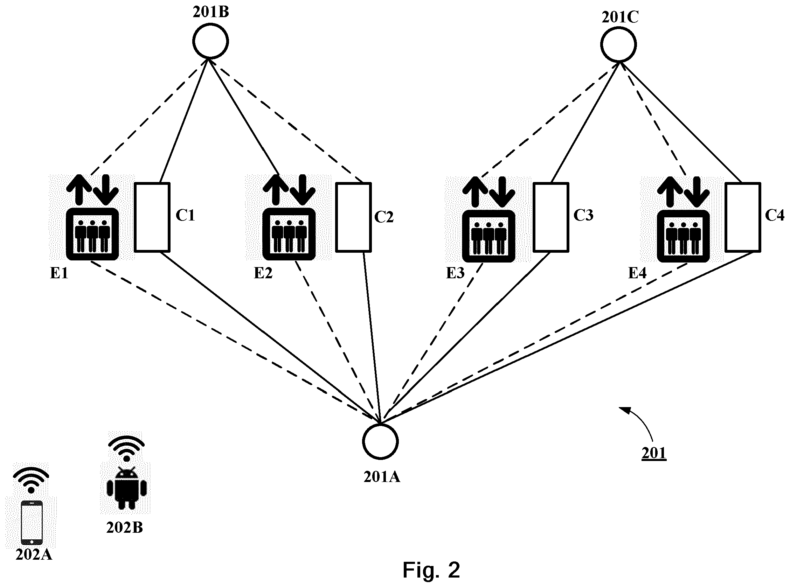

Fig. 2 is a schematic block diagram of a distributed processing system for processing elevator calls according to some embodiments of the present application.

A distributed processing system 201 shown in Fig. 2 includes wireless communication modules 201A-201C (in the following description, the terms "wireless communication module" and "node" may be used interchangeably). In Fig. 2, an association between a node and a call unit is represented by a dotted line, and a communication connection between the node and a call controller is represented by a solid line.

Exemplarily, as shown in Fig. 2, the wireless communication module 201A is associated with call units E1-E4, the wireless communication module 201B is associated with the call units E1 and E2, and the wireless communication module 201C is associated with the call units E3 and E4. Call controllers C1-C4 control operations of call units E1-E4 respectively. Accordingly, the wireless communication module 201A is communicatively connected with the call controllers C1-C4, the wireless communication module 201B is communicatively connected with the call controllers C1 and C2, and the wireless communication module 201C is communicatively connected with the call controllers C3 and C4.

It should be noted that the number of wireless communication modules, call units and call controllers in the embodiment shown in Fig. 2 is only exemplary, and the number of call units and call controllers need not be equal (for example, when one call controller can control multiple call units at the same time, the number of call units will be greater than the number of call controllers). In addition, in practical applications, the number of nodes may be much more than that shown in Fig. 2.

In the embodiment shown in Fig. 2, the wireless communication modules 201A-201C receive an elevator call as access nodes from a terminal device (such as a mobile phone 202A and a mobile robot 202B in Fig. 2), and the access node specified by the terminal device as the receiver performs a call assignment operation for the elevator call and returns a message about call assignment to the terminal device and the corresponding call controller. Taking node 201B as an example, when receiving an elevator call specifying it as the receiver from mobile phone 202A, it selects one of the associated call units E1 and E2 (assuming call unit E2) to assign to the elevator call, and returns an identification of call unit E2 to mobile phone 202A and call controller C2.

Exemplarily, the wireless communication modules 201A-201C may acquire the operation state of the associated call unit from their respective connected call controllers, and perform a call assignment operation based on the elevator call and the acquired operation state. The operation states described here include, for example, but are not limited to, floor where a car of the call unit is currently located and current moving direction. Taking node 201A as an example, when receiving an elevator call specifying it as the receiver from mobile robot 202B, it acquires the operation states of call units E1-E4 from call controllers C1-C4, and selects one of call units E1-E4 (assuming call unit E1) to assign to the elevator call based on the received elevator call and the acquired operation state. In an example, it is assumed that the use type of call units E1 and E2 is passenger use, the use type of call unit E3 is both passenger and cargo use, and the use type of call unit E4 is cargo use, subsequent motion path of the call unit E1 will pass through waiting floor of the mobile robot 202B, and subsequent motion direction is consistent with the direction from the waiting floor to the destination floor, then the node 201A assigns the call unit E3 (or E4) to the received elevator call.

The wireless communication module can not only acquire the device representation of the sender (terminal device) and the device identification of the receiver from the elevator call, but also optionally acquire the waiting floor and the riding direction (or target floor) of the terminal device from the elevator call. Alternatively, the wireless communication module also acquires the riding direction (or target floor) of the terminal device from the elevator call and determines the waiting floor where the terminal device is located based on strength of the received signal.

Exemplarily, the wireless communication module 201A is specified as a node (hereinafter also referred to as a broadcast node) that broadcasts a list about wireless communication modules. Optionally, the wireless communication module may periodically broadcast the list, for example, every 10 seconds. Alternatively, the period for broadcasting the list may be adjusted according to the use period of the call unit, for example, the period may be set to be smaller during the peak use period of each day.

In the embodiment shown in Fig. 2, the communication between the wireless communication module and the terminal device and the call controller may be based on various communication protocols, such as including but not limited to Wi-Fi communication protocol, Bluetooth communication protocol, ZigBee communication protocol, etc.

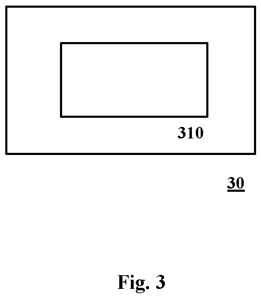

Fig. 3 is a schematic block diagram of an elevator control system according to other embodiments of the present application.

An elevator control system 30 shown in Fig. 3 includes a distributed processing system 310, which may have, for example, various features of the embodiments described above with reference to Fig. 2. It should be noted that in order to avoid repetition, other components in the elevator control system (such as programmable logic controller, frequency converter, speed regulation system, etc.) are not shown in Fig. 3.

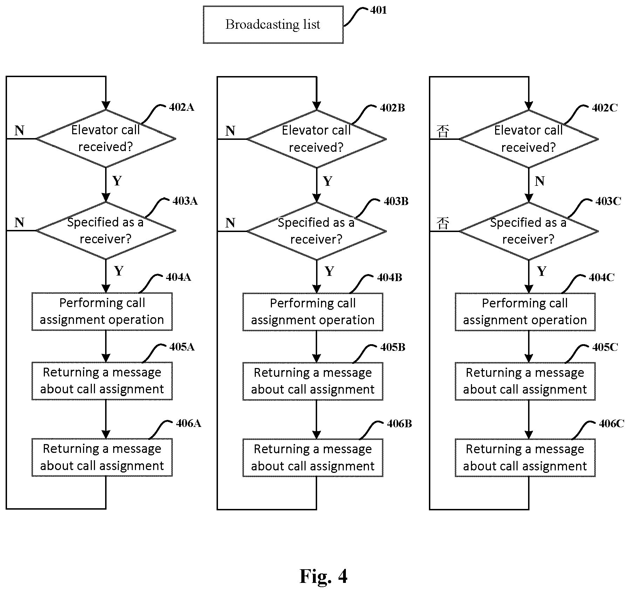

Fig. 4 is a flowchart of a method for processing an elevator call using a distributed processing system according to other embodiments of the present application.

Exemplarily but not necessarily, the following description will take the distributed processing system shown in Fig. 2 as an example. It is not difficult for those skilled in the art to understand that the method shown in Fig. 4 is not limited to the specific example of the distributed processing system described in this specification.

As shown in Fig. 4, the method for processing an elevator call using a distributed processing system includes the following steps:
Step 401: a list about wireless communication modules is broadcast by one or more wireless communication modules in the distributed processing system (for example, wireless communication module 201A in Fig. 2). Exemplarily, the list may take the form shown in Fig. 1A or 1B. Optionally, the wireless communication module may periodically broadcast the list. In addition, optionally, the wireless communication module as a broadcast node should have enough signal transmission power to ensure that the terminal device in the elevator service area can receive the list.
Step 402A: the wireless communication module 201A is in a listening state to determine whether an elevator call from the terminal device is received. If the elevator call is received, proceed to step 403A, otherwise continue to listen to the elevator call.
Step 403A: the wireless communication module 201A determines whether it is specified as the receiver or the target wireless communication module for example according to the device identification contained in the elevator call. If it is the receiver, proceed to step 404A. Otherwise, return to step 402A to continue to listen to the elevator call.
Step 404A: the wireless communication module 201A performs a call assignment operation. Optionally, the wireless communication module 201A assigns one of the associated call units to the elevator call based on the elevator call and the operation state of the associated call units (for example, call units E1-E4 in the case shown in Fig. 2) acquired from the call controller (for example, call controllers C1-C4 in the case shown in Fig. 2). As described above, the operation state may include floor where a car of the call unit is currently located, current moving direction, and the like.
Step 405A: the wireless communication module 201A returns a message about call assignment to the terminal device that sent the elevator call.
Step 406A: the wireless communication module 201A sends a message about call assignment to the call controller associated with the assigned call unit (assuming the assigned call unit E1, the associated call controller is C1). After completing step 406A, the wireless communication module 201A continues to listen to the elevator call by returning to step 402A.

As described above, the message about call assignment may include an identification of the assigned call unit (when the assignment is successful) or an indication of call assignment failure.

The wireless communication modules 201B and 201C may also receive and process elevator calls in a similar or the same manner as the wireless communication module 201A. In particular, the wireless communication module 201B may receive and process the elevator call by executing steps 402B-406B corresponding to steps 402A-406A, and the wireless communication module 201C may receive and process the elevator call by executing steps 402C-406C corresponding to steps 402A-406A.

It should be noted that in the embodiment shown in Fig. 4, the operation for broadcasting the list (corresponding to step 401), the reception and processing of the elevator call at the wireless communication module 201A (corresponding to steps 402A-406A), the reception and processing of the elevator call at the wireless communication module 201B (corresponding to steps 402B-406B) and the reception and processing of the elevator call at the wireless communication module 201C (corresponding to steps 402C-406C) may be performed in a parallel manner or independently of each other. Further, when the list about the wireless communication modules is built into the terminal device or can be acquired by the terminal device from other information sources such as the call controller and the cloud, step 401 for performing the operation for broadcasting the list may be omitted.

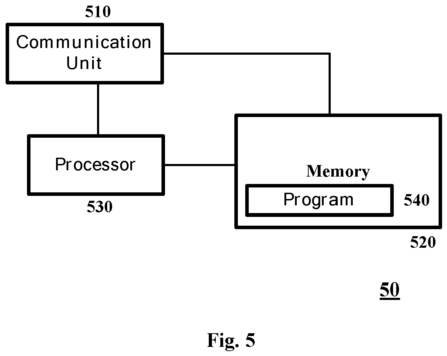

Fig. 5 is a schematic block diagram of a typical terminal device.

As shown in Fig. 5, a terminal device 50 includes a communication unit 510, a memory 520 (for example, nonvolatile memory such as flash memory, ROM, hard disk drive, magnetic disk, optical disk), a processor 530 and a computer program 540 stored on the memory 520 and operable on the processor 530.

The communication unit 510, as a communication interface, is configured to establish a wireless communication connection between a terminal device and an external device or network (for example, a wireless communication module, a remote server, a cloud device, etc.).

The memory 520 stores the computer program 540 executable by the processor 530. The processor 530 is configured to execute the computer program 540.

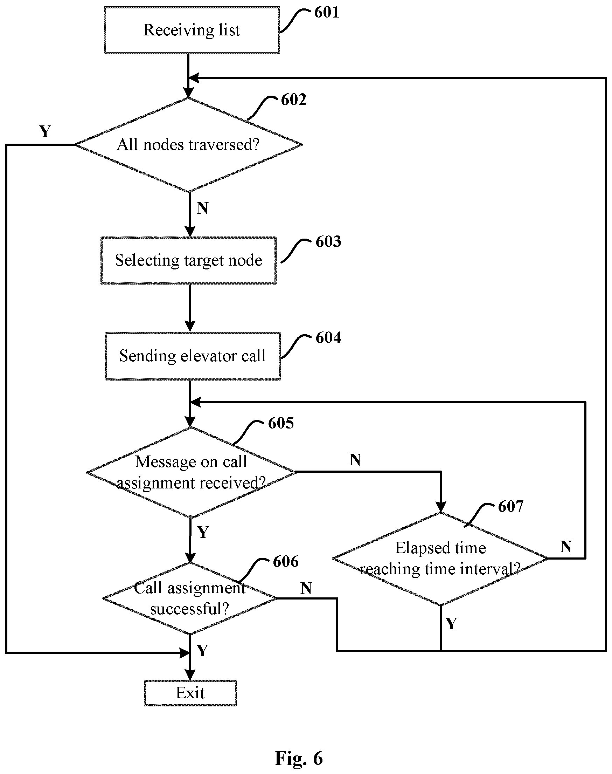

Fig. 6 is a flowchart of a method for generating an elevator call according to other embodiments of the present application.

For illustrative purposes only, the following method steps are described with the help of the scenario of the distributed processing system shown in Fig. 2. It is not difficult for those skilled in the art to understand that the method shown in Fig. 6 is not limited to the specific example of the distributed processing system described in this specification.

The method shown in Fig. 6 includes the following steps performed by the terminal device, which may be performed, for example, by running the computer program 540 on the processor 530 of the terminal device 50 shown in Fig. 5.

Step 601: a list about wireless communication modules is received from one of the plurality of wireless communication modules in the distributed processing (for example, the wireless communication module 201A in Fig. 2). For the purpose of simplifying the control logic, the computer program 540 may be programmed so that when the terminal device receives the list broadcast by one of the wireless communication modules, it will no longer process or discard the received list broadcast by the other wireless communication modules. However, the above method is not necessary. For example, the computer program 540 may be programmed so that the terminal device combines the received list broadcast by the plurality of wireless communication modules into one list.

As described above, the broadcast list may include the device identification and state of the wireless communication module. In addition, the list may further include other information items (for example, the service features of the call unit controlled by the wireless communication module or the order of the wireless communication module sending the elevator call).
Step 602: determine whether an elevator call has been sent to all nodes or available nodes in the list (such as nodes that work normally). If yes, exit the method flow shown in Fig. 6, otherwise go to step 603.
Step 603: select a target wireless communication module to send the elevator call from the received list.

Optionally, the target wireless communication module may be selected in the order indicated by the position of the wireless communication modules in the list. Taking the list shown in Fig. 1A as an example, an elevator call can be sent to the wireless communication module 201A in the first row of the list first. If a message about call assignment is not received from the wireless communication module A within the set time interval after sending the elevator call or the message contains an indication of call assignment failure, an elevator call can be sent to the wireless communication module 201B in the second row of the list, and so on.

Optionally, the wireless communication module may be selected according to the information items about the service features included in the list. Taking the list shown in Fig. 1B as an example, the call units associated with the wireless communication module 201A are E1-E4, which support the use types of both passenger and cargo, the call units associated with the wireless communication module 201B are E1 and E2, which support the use types of only passenger, and the call units associated with the wireless communication module 201C are E3 and E4, which support the use types of both passenger and cargo. Assuming that the terminal device is the mobile robot 202B, the mobile terminal may select one of the wireless communication modules 201A and 201C as the target wireless communication module.

It should be noted that the selection method of the target wireless communication module described above is only exemplary. In other embodiments, for example, the target wireless communication module can also be selected based on other service features such as landing floors and operation periods.
Step 604: send an elevator call through a wireless channel. The sent elevator call includes the device identification of the terminal device and the device identification of the target wireless communication module (for example, wireless communication module 201A or 201C). Optionally, the elevator call may also include waiting floor and riding direction (or the target floor) of the terminal device.
Step 605: determine whether a message about call assignment is received from the target wireless communication module (for example, wireless communication module 201A or 201C). If the message about call assignment is received, proceed to step 606, otherwise proceed to step 607. As described above, optionally, the message about call assignment includes the identification of the assigned call unit or the indication of call assignment failure.
Step 606: judge whether the call assignment is successful, that is, judge whether the message about call assignment contains the identification of the assigned call unit or the indication of call assignment failure. If the message about call assignment contains the identification of the assigned call unit, exit the method flow shown in Fig. 6. If the message about call assignment contains the indication of call assignment failure, return to step 602.
Step 607: judge whether elapsed time since sending the elevator call has reached the set time interval. If the set time interval is reached, return to step 602, otherwise return to step 605.

It should be noted that when the list about wireless communication modules can be built into the terminal device, the operation of step 601 can be modified to access the firmware or memory of the terminal device to acquire the list about wireless communication modules; In addition, the operation of step 601 may also be modified so that the terminal device acquires the list about wireless communication modules from other information sources such as the call controller and the cloud.

According to another aspect of the present application, there is also provided a computer-readable storage medium on which a computer program is stored. When the program is executed by a processor, one or more steps included in the method described above with the help of Fig. 6 can be realized. Optionally, the computer-readable storage medium is provided on a remote server or cloud device suitable for access by the terminal device, so that the computer program can be installed on the terminal device by downloading.

The computer-readable storage medium referred to in the application includes various types of computer storage media, and may be any available medium that may be accessed by a general-purpose or special-purpose computer. For example, the computer-readable storage medium may include RAM, ROM, EPROM, E2PROM, registers, hard disks, removable disks, CD-ROM or other optical disk storage, magnetic disk storage or other magnetic storage devices, or any other transitory or non-transitory medium that may be used to carry or store a desired program code unit in the form of instructions or data structures and that may be accessed by a general-purpose or special-purpose computer or a general-purpose or special-purpose processor. Disks as used herein usually copy data magnetically, while discs use lasers to optically copy data. The above combination should also be included in the protection scope of the computer-readable storage medium. An exemplary storage medium is coupled to the processor such that the processor can read and write information from and to the storage medium. In the alternative, the storage medium may be integrated into the processor. The processor and the storage medium may reside in the ASIC. The ASIC may reside in the user terminal. In the alternative, the processor and the storage medium may reside as discrete components in the user terminal.

Those skilled in the art will appreciate that the various illustrative logical blocks, modules, circuits, and algorithm steps described herein may be implemented as electronic hardware, computer software, or combinations of both.

To demonstrate this interchangeability of hardware and software, various illustrative components, blocks, modules, circuits, and steps have been described above generally in terms of their functionality. Whether such functionality is implemented in hardware or software depends on the particular application and design constraints imposed on the overall system. Those skilled in the art may implement the described functionality in varying ways for the particular application. However, such implementation decisions should not be interpreted as causing a departure from the scope of the present application.

The embodiments and examples presented herein are provided to best illustrate embodiments in accordance with the present technology and its particular application, and to thereby enable those skilled in the art to implement and use the present application. However, those skilled in the art will appreciate that the above description and examples are provided for convenience of illustration and example only. The presented description is not intended to cover every aspect of the application or to limit the application to the precise form disclosed.

## Claims

1. A distributed processing system (201; 310) for processing an elevator call, comprising a plurality of wireless communication modules (201A, 201B, 201C) deployed in an elevator service area, each of the wireless communication modules (201A, 201B, 201C) is associated with one or more call units (E1, E2, E3, E4) and **characterized in that** the wireless communication modules are configured to:
perform a call assignment operation in response to an elevator call from a terminal device (202A, 202B; 50) specifying it as a target wireless communication module; and
return a message about call assignment to the terminal device (202A, 202B; 50).

2. The distributed processing system (201; 310) of claim 1, wherein, the target wireless communication module is indicated by a device identification of one of the wireless communication modules (201A, 201B, 201C) included in the elevator call, and at least one of the wireless communication modules (201A, 201B, 201C) is further configured to broadcast a list about the wireless communication modules (201A, 201B, 201C), the list includes device identifications of the wireless communication modules (201A, 201B, 201C) for selection by the terminal device (202A, 202B; 50).

3. The distributed processing system (201; 310) of claim 1 or 2, wherein the target wireless communication module is indicated by a device identification of one of the wireless communication modules (201A, 201B, 201C) included in the elevator call, and a list about the wireless communication modules (201A, 201B, 201C) is built into the terminal device (202A, 202B; 50), the list includes device identifications of the wireless communication modules (201A, 201B, 201C) for selection by the terminal device (202A, 202B; 50).

4. The distributed processing system (201; 310) of any preceding claim, wherein the target wireless communication module is indicated by a device identification of one of the wireless communication modules (201A, 201B, 201C) included in the elevator call, and the terminal device (202A, 202B; 50) acquires a list about the wireless communication modules (201A, 201B, 201C) from a call controller (C1, C2, C3, C4) or cloud, the list includes device identifications of the wireless communication modules (201A, 201B, 201C) for selection by the terminal device (202A, 202B; 50).

5. The distributed processing system (201; 310) of any preceding claim, wherein the message about call assignment includes an identification of the assigned call unit (E1, E2, E3, E4) or an indication of call assignment failure.

6. The distributed processing system (201; 310) of any preceding claim, wherein each of the wireless communication modules (201A, 201B, 201C) is configured to perform the call assignment operation in the following manner:
assigning one of the associated call units (E1, E2, E3, E4) to the elevator call based on the elevator call and an operation state of the associated call units (E1, E2, E3, E4) acquired from a call controller (C1, C2, C3, C4), wherein the operation state includes floors where cars of the call units (E1, E2, E3, E4) are currently located and current moving direction.

7. The distributed processing system (201; 310) of claim 6, wherein each of the wireless communication modules (201A, 201B, 201C) is further configured to:
send the message about call assignment to the call controller (C1, C2, C3, C4) associated with the assigned call unit (E1, E2, E3, E4).

8. The distributed processing system (201; 310) of claim 6 or 7, wherein the wireless communication module (201A, 201B, 201C) communicates with the call controller (C1, C2, C3, C4) in a wired or wireless manner.

9. The distributed processing system (201; 310) of any of claims 2 to 8, wherein the list also includes state information of the wireless communication modules (201A, 201B, 201C) and service feature that can be provided by the call units (E1, E2, E3, E4) associated with the wireless communication modules (201A, 201B, 201C).

10. The distributed processing system (201; 310) of any preceding claim, wherein the plurality of wireless communication modules (201A, 201B, 201C) are powered by at least two independently operating power supplies.

11. The distributed processing system (201; 310) of any preceding claim, wherein the list indicates an order of the wireless communication modules (201A, 201B, 201C) in which the terminal device (202A, 202B; 50) sends the elevator call by means of positions of the wireless communication modules (201A, 201B, 201C) present in the list.

12. The distributed processing system (201; 310) of any preceding claim, wherein the wireless communication module (201A, 201B, 201C) is installed within a landing or elevator hoistway.

13. An elevator control system (30) comprising the distributed processing system (201; 310) of any one of claims 1-12.

14. A method for processing an elevator call using a distributed processing system (201; 310), wherein the distributed processing system comprises a plurality of wireless communication modules (201A, 201B, 201C) deployed in an elevator service area, each of the wireless communication modules (201A, 201B, 201C) is associated with one or more call units (E1, E2, E3, E4), and the method comprises the following steps:
performing (404A, 404B, 404C) a call assignment operation by one of the plurality of wireless communication modules (201A, 201B, 201C) in response to an elevator call sent by an terminal device (202A, 202B; 50) specifying it as a target wireless communication module; and
returning (405A, 405B, 405C) a message about call assignment to the terminal device (202A, 202B; 50) by the wireless communication module (201A, 201B, 201C) performing the call assignment operation.

15. A computer-readable storage medium (520) on which a computer program (540) suitable for execution on a processor (530) of a terminal device (202A, 202B; 50) is stored, and the execution of the computer program (540) causes the following operations:
A. selecting (603) a target wireless communication module (201A, 201B, 201C) to send an elevator call from a list about wireless communication modules (201A, 201B, 201C), the list includes device identifications of a plurality of wireless communication modules (201A, 201B, 201C), wherein each of the wireless communication modules (201A, 201B, 201C) is associated with one or more call units (E1, E2, E3, E4);
B. sending (604) an elevator call, the elevator call includes a device identification of the terminal device (202A, 202B; 50) and a device identification of the target wireless communication module; and
C. receiving (605) a message about call assignment from the target wireless communication module (201A, 201B, 201C).

## Patentansprüche

1. Verteiltes Verarbeitungssystem (201; 310) zum Verarbeiten eines Aufzugsanrufs, umfassend eine Vielzahl von drahtlosen Kommunikationsmodulen (201A, 201B, 201C), die in einem Aufzugsdienstbereich eingesetzt ist, wobei jedes der drahtlosen Kommunikationsmodule (201A, 201B, 201C) einer oder mehreren Anrufeinheiten (E1, E2, E3, E4) zugeordnet ist, und **dadurch gekennzeichnet, dass** die drahtlosen Kommunikationsmodule konfiguriert sind zum:
Durchführen eines Anrufzuweisungsvorgangs als Reaktion auf einen Aufzugsanruf von einer Endgerätvorrichtung (202A, 202B; 50), die es als ein drahtloses Zielkommunikationsmodul spezifiziert; und
Zurücksenden einer Nachricht über die Anrufzuweisung an die Endgerätvorrichtung (202A, 202B; 50).

2. Verteiltes Verarbeitungssystem (201; 310) nach Anspruch 1, wobei das drahtlose Zielkommunikationsmodul durch eine Vorrichtungsidentifikation von einem der drahtlosen Kommunikationsmodule (201A, 201B, 201C) angegeben wird, die in dem Aufzugsanruf beinhaltet ist, und mindestens eines der drahtlosen Kommunikationsmodule (201A, 201B, 201C) ferner so konfiguriert ist, dass es eine Liste über die drahtlosen Kommunikationsmodule (201A, 201B, 201C) überträgt, wobei die Liste Vorrichtungsidentifikationen der drahtlosen Kommunikationsmodule (201A, 201B, 201C) zur Auswahl durch die Endgerätvorrichtung (202A, 202B; 50) beinhaltet.

3. Verteiltes Verarbeitungssystem (201; 310) nach Anspruch 1 oder 2, wobei das drahtlose Zielkommunikationsmodul durch eine Vorrichtungsidentifikation von einem von den drahtlosen Kommunikationsmodulen (201A, 201B, 201C), die in dem Aufzugsanruf beinhaltet ist, angegeben wird, und eine Liste über die drahtlosen Kommunikationsmodule (201A, 201B, 201C) in die Endgerätvorrichtung (202A, 202B; 50) eingebaut ist, wobei die Liste Vorrichtungsidentifikationen der drahtlosen Kommunikationsmodule (201A, 201B, 201C) zur Auswahl durch die Endgerätvorrichtung (202A, 202B; 50) beinhaltet.

4. Verteiltes Verarbeitungssystem (201; 310) nach einem der vorhergehenden Ansprüche, wobei das drahtlose Zielkommunikationsmodul durch eine Vorrichtungsidentifikation von einem der drahtlosen Kommunikationsmodule (201A, 201B, 201C), die in dem Aufzugsanruf beinhaltet ist, angegeben wird, und die Endgerätvorrichtung (202A, 202B; 50) eine Liste über die drahtlosen Kommunikationsmodule (201A, 201B, 201C) von einer Anrufsteuerung (C1, C2, C3, C4) oder einer Cloud erwirbt, wobei die Liste Vorrichtungsidentifikationen der drahtlosen Kommunikationsmodule (201A, 201B, 201C) zur Auswahl durch die Endgerätvorrichtung (202A, 202B; 50) beinhaltet.

5. Verteiltes Verarbeitungssystem (201; 310) nach einem der vorhergehenden Ansprüche, wobei die Nachricht über die Anrufzuweisung eine Identifikation der zugewiesenen Anrufeinheit (E1, E2, E3, E4) oder einen Indikator für eine fehlgeschlagene Anrufzuweisung beinhaltet.

6. Verteiltes Verarbeitungssystem (201; 310) nach einem der vorhergehenden Ansprüche, wobei jedes der drahtlosen Kommunikationsmodule (201A, 201B, 201C) so konfiguriert ist, dass es den Anrufzuweisungsvorgang auf folgende Weise durchführt:
Zuweisen einer der zugeordneten Aufrufeinheiten (E1, E2, E3, E4) zu dem Aufzugsanruf basierend auf dem Aufzugsanruf und einem Betriebszustand der zugeordneten Aufrufeinheiten (E1, E2, E3, E4), der von einer Aufrufsteuerung (C1, C2, C3, C4) erfasst wird, wobei der Betriebszustand Etagen, in denen sich Kabinen der Aufrufeinheiten (E1, E2, E3, E4) gegenwärtig befinden, und die gegenwärtige Bewegungsrichtung beinhaltet.

7. Verteiltes Verarbeitungssystem (201; 310) nach Anspruch 6, wobei jedes der drahtlosen Kommunikationsmodule (201A, 201B, 201C) ferner konfiguriert ist zum:
Senden der Nachricht über die Anrufzuweisung an die Anrufsteuerung (C1, C2, C3, C4), die der zugewiesenen Anrufeinheit (E1, E2, E3, E4) zugeordnet ist.

8. Verteiltes Verarbeitungssystem (201; 310) nach Anspruch 6 oder 7, wobei das drahtlose Kommunikationsmodul (201A, 201B, 201C) mit der Anrufsteuerung (C1, C2, C3, C4) auf drahtgebundene oder drahtlose Weise kommuniziert.

9. Verteiltes Verarbeitungssystem (201; 310) nach einem der Ansprüche 2 bis 8, wobei die Liste ebenfalls Zustandsinformationen der drahtlosen Kommunikationsmodule (201A, 201B, 201C) und Dienstmerkmale beinhaltet, die von den Anrufeinheiten (E1, E2, E3, E4) bereitgestellt werden können, die den drahtlosen Kommunikationsmodulen (201A, 201B, 201C) zugeordnet sind.

10. Verteiltes Verarbeitungssystem (201; 310) nach einem der vorhergehenden Ansprüche, wobei die Vielzahl von drahtlosen Kommunikationsmodulen (201A, 201B, 201C) von mindestens zwei unabhängig voneinander arbeitenden Stromversorgungen gespeist wird.

11. Verteiltes Verarbeitungssystem (201; 310) nach einem der vorhergehenden Ansprüche, wobei die Liste eine Reihenfolge der drahtlosen Kommunikationsmodule (201A, 201B, 201C) angibt, in der die Endgerätvorrichtung (202A, 202B; 50) den Aufzugsanruf durch Positionen der in der Liste vorhandenen drahtlosen Kommunikationsmodule (201A, 201B, 201C) sendet.

12. Verteiltes Verarbeitungssystem (201; 310) nach einem der vorhergehenden Ansprüche, wobei das drahtlose Kommunikationsmodul (201A, 201B, 201C) in einem Stockwerk oder Aufzugsschacht installiert ist.

13. Aufzugssteuersystem (30), umfassend das verteilte Verarbeitungssystem (201; 310) nach einem der Ansprüche 1-12.

14. Verfahren zum Verarbeiten eines Aufzugsanrufs unter Verwendung eines verteilten Verarbeitungssystems (201; 310), wobei das verteilte Verarbeitungssystem eine Vielzahl von drahtlosen Kommunikationsmodulen (201A, 201B, 201C) umfasst, die in einem Aufzugsdienstbereich eingesetzt ist, wobei jedes der drahtlosen Kommunikationsmodule (201A, 201B, 201C) einer oder mehreren Anrufeinheiten (E1, E2, E3, E4) zugeordnet ist, und das Verfahren die folgenden Schritte umfasst:
Durchführen (404A, 404B, 404C) eines Anrufzuweisungsvorgangs durch eines der Vielzahl von drahtlosen Kommunikationsmodulen (201A, 201B, 201C) in Reaktion auf einen Aufzugsanruf, der von einer Endgerätvorrichtung (202A, 202B; 50) gesendet wird, die es als drahtloses Zielkommunikationsmodul spezifiziert; und
Zurücksenden (405A, 405B, 405C) einer Nachricht über die Anrufzuweisung an die Endgerätvorrichtung (202A, 202B; 50) durch das drahtlose Kommunikationsmodul (201A, 201B, 201C), das den Anrufzuweisungsvorgang durchführt.

15. Computerlesbares Speichermedium (520), auf dem ein Computerprogramm (540) gespeichert ist, das zum Ausführen auf einem Prozessor (530) einer Endgerätvorrichtung (202A, 202B; 50) geeignet ist, wobei die Ausführung des Computerprogramms (540) die folgenden Vorgänge bewirkt:
A. Auswählen (603) eines drahtlosen Zielkommunikationsmoduls (201A, 201B, 201C) zum Senden eines Aufzugsanrufs aus einer Liste über drahtlose Kommunikationsmodule (201A, 201B, 201C), wobei die Liste Vorrichtungsidentifikationen einer Vielzahl von drahtlosen Kommunikationsmodulen (201A, 201B, 201C) beinhaltet, wobei jedes der drahtlosen Kommunikationsmodule (201A, 201B, 201C) einer oder mehreren Anrufeinheiten (E1, E2, E3, E4) zugeordnet ist;
B. Senden (604) eines Aufzugsanrufs, wobei der Aufzugsanruf eine Vorrichtungsidentifikation der Endgerätvorrichtung (202A, 202B; 50) und eine Vorrichtungsidentifikation des drahtlosen Zielkommunikationsmoduls beinhaltet; und
C. Empfangen (605) einer Nachricht über die Anrufzuweisung von dem drahtlosen Zielkommunikationsmodul (201A, 201B, 201C).

## Revendications

1. Système de traitement distribué (201 ; 310) pour traiter un appel d'ascenseur, comprenant une pluralité de modules de communication sans fil (201A, 201B, 201C) déployés dans une zone de service d'ascenseur, chacun des modules de communication sans fil (201A, 201B, 201C) est associé à une ou plusieurs unités d'appel (E1, E2, E3, E4) et **caractérisé en ce que** les modules de communication sans fil sont configurés pour :
réaliser une opération d'attribution d'appel en réponse à un appel d'ascenseur provenant d'un dispositif terminal (202A, 202B ; 50) en le spécifiant comme module de communication sans fil cible ; et renvoyer un message concernant l'attribution d'appel au dispositif terminal (202A, 202B ; 50).

2. Système de traitement distribué (201 ; 310) selon la revendication 1, dans lequel le module de communication sans fil cible est indiqué par une identification de dispositif de l'un des modules de communication sans fil (201A, 201B, 201C) inclus dans l'appel d'ascenseur, et au moins l'un des modules de communication sans fil (201A, 201B, 201C) est en outre configuré pour diffuser une liste concernant les modules de communication sans fil (201A, 201B, 201C), la liste comporte des identifications de dispositif des modules de communication sans fil (201A, 201B, 201C) pour une sélection par le dispositif terminal (202A, 202B ; 50).

3. Système de traitement distribué (201 ; 310) selon la revendication 1 ou 2, dans lequel le module de communication sans fil cible est indiqué par une identification de dispositif de l'un des modules de communication sans fil (201A, 201B, 201C) inclus dans l'appel d'ascenseur, et une liste concernant les modules de communication sans fil (201A, 201B, 201C) est intégrée dans le dispositif terminal (202A, 202B ; 50), la liste comporte des identifications de dispositif des modules de communication sans fil (201A, 201B, 201C) pour une sélection par le dispositif terminal (202A, 202B ; 50).

4. Système de traitement distribué (201 ; 310) selon une quelconque revendication précédente, dans lequel le module de communication sans fil cible est indiqué par une identification de dispositif de l'un des modules de communication sans fil (201A, 201B, 201C) inclus dans l'appel d'ascenseur, et le dispositif terminal (202A, 202B ; 50) acquiert une liste concernant les modules de communication sans fil (201A, 201B, 201C) à partir d'un dispositif de commande d'appel (C1, C2, C3, C4) ou du nuage, la liste comporte des identifications de dispositif des modules de communication sans fil (201A, 201B, 201C) pour une sélection par le dispositif terminal (202A, 202B ; 50).

5. Système de traitement distribué (201 ; 310) selon une quelconque revendication précédente, dans lequel le message concernant l'attribution d'appel comporte une identification de l'unité d'appel attribuée (E1, E2, E3, E4) ou une indication d'échec d'attribution d'appel.

6. Système de traitement distribué (201 ; 310) selon une quelconque revendication précédente, dans lequel chacun des modules de communication sans fil (201A, 201B, 201C) est configuré pour réaliser l'opération d'attribution d'appel de la manière suivante :
attribuer l'une des unités d'appel associées (E1, E2, E3, E4) à l'appel d'ascenseur sur la base de l'appel d'ascenseur et d'un état de fonctionnement des unités d'appel associées (E1, E2, E3, E4) acquis à partir d'un dispositif de commande d'appel (C1, C2, C3, C4), dans lequel l'état de fonctionnement comporte les étages où se trouvent actuellement les cabines des unités d'appel (E1, E2, E3, E4) et la direction de déplacement actuelle.

7. Système de traitement distribué (201 ; 310) selon la revendication 6, dans lequel chacun des modules de communication sans fil (201A, 201B, 201C) est également configuré pour :
envoyer le message concernant l'attribution d'appel au dispositif de commande d'appel (C1, C2, C3, C4) associé à l'unité d'appel attribuée (E1, E2, E3, E4).

8. Système de traitement distribué (201 ; 310) selon la revendication 6 ou 7, dans lequel le module de communication sans fil (201A, 201B, 201C) communique avec le dispositif de commande d'appel (C1, C2, C3, C4) de manière filaire ou sans fil.

9. Système de traitement distribué (201 ; 310) selon l'une quelconque des revendications 2 à 8, dans lequel la liste comporte également des informations d'état des modules de communication sans fil (201A, 201B, 201C) et des fonctionnalités de service qui peuvent être fournies par les unités d'appel (E1, E2, E3, E4) associées aux modules de communication sans fil (201A, 201B, 201C).

10. Système de traitement distribué (201 ; 310) selon une quelconque revendication précédente, dans lequel la pluralité de modules de communication sans fil (201A, 201B, 201C) sont alimentés par au moins deux alimentations électriques fonctionnant indépendamment.

11. Système de traitement distribué (201 ; 310) selon une quelconque revendication précédente, dans lequel la liste indique un ordre des modules de communication sans fil (201A, 201B, 201C) dans lequel le dispositif terminal (202A, 202B ; 50) envoie l'appel d'ascenseur au moyen de positions des modules de communication sans fil (201A, 201B, 201C) présents dans la liste.

12. Système de traitement distribué (201 ; 310) selon une quelconque revendication précédente, dans lequel le module de communication sans fil (201A, 201B, 201C) est installé à l'intérieur d'un palier ou d'une cage d'ascenseur.

13. Système de commande d'ascenseur (30) comprenant le système de traitement distribué (201 ; 310) selon l'une quelconque des revendications 1 à 12.

14. Procédé de traitement d'un appel d'ascenseur à l'aide d'un système de traitement distribué (201 ; 310), dans lequel le système de traitement distribué comprend une pluralité de modules de communication sans fil (201A, 201B, 201C) déployés dans une zone de service d'ascenseur, chacun des modules de communication sans fil (201A, 201B, 201C) est associé à une ou plusieurs unités d'appel (E1, E2, E3, E4) et le procédé comprend les étapes suivantes :
réalisation (404A, 404B, 404C) d'une opération d'attribution d'appel par l'un de la pluralité de modules de communication sans fil (201A, 201B, 201C) en réponse à un appel d'ascenseur envoyé par un dispositif terminal (202A, 202B ; 50) le spécifiant comme un module de communication sans fil cible ; et
renvoi (405A, 405B, 405C) d'un message concernant l'attribution d'appel au dispositif terminal (202A, 202B ; 50) par le module de communication sans fil (201A, 201B, 201C) réalisant l'opération d'attribution d'appel.

15. Support de stockage lisible par ordinateur (520) sur lequel est stocké un programme informatique (540) adapté à une exécution sur un processeur (530) d'un dispositif terminal (202A, 202B ; 50), et l'exécution du programme informatique (540) provoque les opérations suivantes :
A. sélection (603) d'un module de communication sans fil cible (201A, 201B, 201C) pour envoyer un appel d'ascenseur à partir d'une liste concernant les modules de communication sans fil (201A, 201B, 201C), la liste comporte des identifications de dispositif d'une pluralité de modules de communication sans fil (201A, 201B, 201C), dans lequel chacun des modules de communication sans fil (201A, 201B, 201C) est associé à une ou plusieurs unités d'appel (E1, E2, E3, E4) ;
B. envoi (604) d'un appel d'ascenseur, l'appel d'ascenseur comporte une identification de dispositif du dispositif terminal (202A, 202B ; 50) et une identification de dispositif du module de communication sans fil cible ; et
C. réception (605) d'un message concernant l'attribution d'appel en provenance du module de communication sans fil cible (201A, 201B, 201C).
